# EUROPÄISCHE PATENTSCHRIFT

(11) **EP 2 537 716 B1**
(45) Veröffentlichungstag und Bekanntmachung des Hinweises auf die Patenterteilung: **17.09.2014**
(21) Anmeldenummer: 12002243.9
(22) Anmeldetag: 28.03.2012
(51) Int. Cl.: B60R 21/0134

(54) **Verfahren zur Auslösung wenigstens einer irreversiblen Rückhalteeinrichtung eines Kraftfahrzeugs**
Method for triggering at least one irreversible retention device of a motor vehicle
Procédé de déclenchement d'au moins un dispositif de retenue irréversible d'un véhicule automobile

(30) Priorität: 22.06.2011 DE 102011105356
(43) Veröffentlichungstag der Anmeldung: 26.12.2012
(73) Patentinhaber: AUDI AG, 85045 Ingolstadt (DE)
(72) Erfinder: Mählisch, Mirko, 85080 Gaimersheim (DE)
(74) Vertreter: Thielmann, Frank

(56) Entgegenhaltungen:
- WO-A1-2009/157828
- DE-A1-102004 016 267
- DE-A1-102008 046 488
- US-A1- 2005 195 383

## Beschreibung

Die Erfindung betrifft ein Verfahren zur Auslösung wenigstens einer irreversiblen Rückhalteeinrichtung eines Kraftfahrzeugs vor dem Beginn einer tatsächlichen Kollision, wobei das Kraftfahrzeug wenigstens zwei unabhängig voneinander arbeitende, das Fahrzeugumfeld kontinuierlich vermessende Erfassungseinrichtungen aufweist, mittels welchen Informationen bezüglich eines sich im Umfeld befindlichen Objekts erfasst werden, welche Informationen dahingehend analysiert werden, ob für eine Auslösung einer Rückhalteeinrichtung zu erfüllende Auslösebedingungen gegeben sind.

Irreversible Rückhalteeinrichtungen, die kraftfahrzeugseitig verbaut werden, sind üblicherweise solche, die pyrotechnisch aktiviert werden. Beispiele hierfür sind Airbags, die durch die pyrotechnische Aktivierung aufgeblasen werden, oder pyrotechnische Gurtstraffer, die über die pyrotechnische Aktivierung den Sicherheitsgurt straffen und so den Fahrer oder Beifahrer entsprechend positionieren. Hinsichtlich der Aktivierung sind zwei grundsätzlich unterschiedliche Vorgehensweisen bekannt. Zum einen kann die Aktivierung erst dann erfolgen, wenn sich die Fahrzeuge tatsächlich berühren, mithin also die Kollision gegeben und sensorisch festgestellt ist. Bekannt ist aber auch die Auslösung einer irreversiblen Rückhalteeinrichtung kurz vor dem tatsächlichen Kollisionszeitpunkt, der üblicherweise t₀-Zeitpunkt genannt wird. Diese frühzeitige Auslösung hat beispielsweise im Falle eines Airbags den Vorteil, dass ein etwas längerer Zeitraum zum Aufblasen des Airbags zur Verfügung steht bzw. dass der Airbag bis zu dem Zeitpunkt, zu dem die Person in den Airbag fällt, auf ein größeres Volumen aufgeblasen werden kann, wodurch der Insassenschutz verbessert wird. Zum anderen kann durch die zur Verfügung stehende längere Inflationszeit der Aufblasvorgang weniger aggressiv ausgelegt werden, wodurch das Verletzungsrisiko bei so genannten "out-off-position"-Fällen, in denen die Person in einer ungünstigen Position relativ zum sich entfaltenden Airbag sitzt, verringert werden. Auch die zeitliche Vorauslösung pyrotechnischer Gurtstraffer ist von Vorteil, da auch hier der Straffungsvorgang wenig aggressiv ausgelegt werden kann, da eine längere Zeit zur optimalen Positionierung des Insassen bzw. zum Aufbau einer Gegenbeschleunigung zur Verfügung steht.

Die zeitliche Vorauslösung setzt voraus, dass vorab definierte Auslösebedingungen erfüllt sind, die anzeigen, dass tatsächlich eine Situation gegeben ist, in der eine Kollision unmittelbar bevorsteht. Diese Auslösebedingungen sind in einer geeigneten Steuerungseinrichtung des Rückhaltesystems, Teil welcher die Rückhalteeinrichtung ist, hinterlegt. Damit überprüft werden kann, ob die Auslösebedingungen erfüllt sind, mithin also eine Auslösung der irreversiblen Rückhalteeinrichtung zu einem bestimmten Zeitpunkt eben erfolgen soll, werden Informationen aus dem Fahrzeugumfeld mittels geeigneter Erfassungseinrichtungen wie Kameras, Radarsensoren und dergleichen erfasst und beispielsweise seitens der Steuerungseinrichtung des Rückhaltesystems ausgewertet. Ein solches System ist beispielsweise aus DE 10 2008 059 240 A1 bekannt. Ein anderes Verfahren ist z.B. aus der 10 2008 046 488 A1 bekannt, welche dem Oberbegriff von Anspruch 1 bzw. Anspruch 7 entspricht. Eine erste Erfassungseinrichtung ist eine stereoskopische Kamera, eine zweite Erfassungseinrichtung ist in Form eines oder mehrerer Radarsensoren vorgesehen. Mit der Kamera werden optische Bilder des Fahrzeugvorfelds aufgenommen und hinsichtlich darin enthaltener Objekte ausgewertet. Das Radarsystem weist ebenfalls einen relativ großen Erfassungsbereich im Fahrzeugvorfeld auf, sodass auch hierüber entsprechende Informationen bezüglich eines im Fahrzeugvorfeld befindlichen Objekts erfasst respektive abgeleitet werden können, wobei das Radarsystem einen sich weiter erstreckenden, größeren Erfassungsbereich als das Kamerasystem besitzt. Sämtliche von beiden Erfassungseinrichtungen aufgenommene Informationen werden der Steuerungseinrichtung zugeführt, wo sie quasi fusioniert werden, also kumulativ ausgewertet werden. Anhand sämtlicher, kumulativ betrachteter Informationen, das heißt, dass sie unmittelbar aus den erfassten Daten hervorgehen, oder durch Auswertung dieser Daten ermittelt werden, wird nun seitens der Steuerungseinrichtung geprüft, ob alle Auslösebedingungen, die systemseitig definiert sind, erfüllt sind. Hierbei wird nicht unterschieden, von welchem Erfassungssystem die Information bezüglich einer bestimmten Auslösebedingung stammt, erforderlich ist nur, dass insgesamt alle Auslösebedingungen durch die kumulativ vorliegenden Informationen der Erfassungseinrichtungen erfüllt werden. Parallel dazu erfolgt die Berechnung der Auslöseparameter, gestützt auf welche die Steuerung der Auslöseeinrichtung erfolgt, wenn diese tatsächlich auszulösen ist, beispielsweise der Auslösezeitpunkt oder eine bestimmte Auslösecharakteristik. Die Auslösung erfolgt sodann, wenn zum einen die kumulative Informationsverarbeitung ergeben hat, dass sämtliche Auslösebedingungen erfüllt sind, zum anderen, wenn der Auslösezeitpunkt gegeben ist.

Das Sicherheitsniveau dieses Auslöseverfahrens ist nicht allzu hoch, da die Daten kumulativ verarbeitet werden. Einfache Fehler innerhalb der Datenerfassung oder der Auswertung können zu Fehlauslösungen führen.

Der Erfindung liegt damit das Problem zugrunde, ein Verfahren anzugeben, das es ermöglicht, auf sicherer Basis das Vorliegen der Auslösebedingungen zu ermitteln bzw. die Auslösung tatsächlich nur dann freizugeben, wenn sichergestellt ist, dass eine entsprechende Situation auch gegeben ist.

Zur Lösung dieses Problems ist erfindungsgemäß vorgesehen, dass anhand der Informationen jedes Erfassungssystems separat analysiert wird, ob die Auslösebedingungen gegeben sind, wobei die Auslösung nur dann erfolgt, wenn beide Analyseergebnisse insoweit übereinstimmen, dass jeweils die Auslösebedingungen als erfüllt bestimmt werden.

Bei dem erfindungsgemäßen Verfahren wird analysiert, ob die isoliert betrachteten Informationen jedes einzelnen Erfassungssystems bzw. davon abgeleitete Informationen die Auslösebedingungen erfüllen oder nicht. Jeder Informationsdatensatz wird also separat analysiert und geprüft, ob eine Situation gegeben ist bzw. beschrieben wird, die geeignet ist, eine Vorauslösung der irreversiblen Rückhalteeinrichtung vorzunehmen. Die beiden separaten Analyseergebnisse werden sodann quasi "und"-verknüpft, letztlich also verglichen, um zu ermitteln, ob beide Analyseergebnisse insoweit übereinstimmen, dass jeweils die Auslösebedingungen als erfüllt bestimmt wurden. Erst dann, wenn eben dieser Vergleich ergibt, dass zweimal unabhängig voneinander das Vorliegen der Auslösebedingungen erfasst wurde, wird die Auslösung grundsätzlich freigegeben und gestützt auf die parallel ermittelten Auslöseparameter zum gegebenen Zeitpunkt die Auslösung vorgenommen.

Zur Auslösung vor dem Aufprall müssen also die Auslösebedingungen unabhängig von mindestens zwei vorausschauenden Erfassungssystemen verifiziert werden bzw. deren gelieferte Informationen geprüft werden, ob diese geeignet sind, eine Situation zu beschreiben, die die Auslösebedingungen erfüllt. Jedes Erfassungssystem muss folglich alle zur Prüfung dieser Bedingungen notwendigen Größen alleine ermitteln können respektive Daten liefern, die dahingehend ausgewertet werden können. Nachdem die Datenauswertung bevorzugt in der Steuerungseinrichtung des Rückhaltesystems vorgenommen wird, muss also die Steuerungseinrichtung über eine geeignete Verarbeitungs- oder Auswertungssoftware in der Lage sein, anhand der systemspezifischen Daten jeweils eine Verarbeitung bzw. Analyse vornehmen zu können. Diese Analyse muss beispielsweise Daten wie den so genannnten TTC-Wert (TTC= Time-To-Collision), die Objektmassenklassen, die Objektbreite, den Anprallort, den Anprallzeitpunkt, den Anprallwinkel etc. bestimmen können, welche grundsätzlich als Auslösebedingungen angesehen werden können. Diese Informationen respektive Größen müssen zu beiden separaten Informationsdatensätzen beider Erfassungssysteme separat ermittelt werden, sodass die Auslösebedingungsdaten vollständig redundant vorliegen.

Hierüber wird folglich ein Höchstmaß an Sicherheit erreicht, da über mindestens zwei unabhängige Systeme verifiziert wurde, dass eine Situation gegeben ist, die die Auslösebedingungen erfüllt und folglich eine vorzeitige Auslösung des irreversiblen Rückhaltesystems gerechtfertigt ist.

In Weiterbildung der Erfindung kann wenigstens eine weitere Erfassungseinrichtung verwendet werden, die ebenfalls objektbezogene Informationen liefert, die ebenfalls separat bezüglich des Vorliegens der Auslösebedingungen analysiert werden, wobei die Auslösung nur dann erfolgt, wenn auch das dritte Analyseergebnis das Vorliegen der Auslösebedingungen anzeigt. Die Einbindung einer dritten Erfassungseinrichtung und separate Überprüfung der von dieser gelieferten Informationen führt zu einer überredundanten Auslegung des Systems, wodurch der Sicherheitsstandard noch weiter verbessert wird, da die Auslösung nur dann erfolgt, wenn drei separat bestätigte Auslösebedingungen vorliegen. Denkbar ist natürlich auch die Einbindung mehrerer weiterer Erfassungseinrichtungen, sofern solche verbaut sind. Jede eingebundene Erfassungseinrichtung liefert entsprechende Informationen, die jeweils separat analysiert werden und separate Analyseergebnisse beisteuern, wobei die Auslösung erfolgt, wenn alle Analyseergebnisse positiv sind.

Wie beschrieben ist es parallel zur Prüfung der Auslösebedingungen auch erforderlich, entsprechende Auslöseparameter wie beispielsweise den Zeitpunkt der Auslösung oder die Auslösecharakteristik, wenn beispielsweise die pyrotechnische Zündcharakteristik variierbar ist, zu ermitteln. Zweckmäßigerweise werden hierfür die Informationen aller Erfassungssysteme verwendet, das heißt, dass die Berechnung der Auslöseparameter nicht nur auf Basis der Informationen eines Erfassungssystems, sondern beider oder aller drei eingebundenen Erfassungssysteme erfolgt. Auch dies steigert wiederum die Genauigkeit der Parameterermittlung.

Vorzugsweise werden verschiedenartige Erfassungseinrichtungen zur Erfassung der Informationen verwendet. Als Erfassungseinrichtungen können hierbei eine Monokamera, ein PMD-Sensor, eine Stereokamera oder Radarsensoren verwendet werden, wobei beliebige Kombinationen möglich sind. Beispielsweise können eine Monokamera und ein PMD-Sensor verwendet werden. Alternativ kann eine Stereokamera und ein PMD-Sensor verwendet werden. Eine weitere Kombinationsmöglichkeit ist die Verwendung einer Stereo-Kamera und eines oder mehrerer hochauflösender objektklassifizierender Radarsensoren. Schließlich kann auch ein PMD-Sensor und ein oder mehrere hochauflösende objektklassifizierende Radarsensoren verwendet werden. Werden drei Erfassungseinrichtungen eingesetzt, so können die entsprechenden exemplarisch angegebenen Kombinationen um eine weitere der genannten Einrichtungen ergänzt werden.

In Weiterbildung der Erfindung ist es möglich, zusätzlich zu den beiden oder den drei Erfassungseinrichtungen auch mittels einer Fahrzeug-zu-Fahrzeug-Kommunikationseinrichtung Informationen des Objekts zu erfassen, die im Rahmen der Analyse der Auslösebedingungen und/oder der Ermittlung der Auslöseparameter berücksichtigt werden. Moderne Kraftfahrzeuge werden zunehmend mit so genannten Fahrzeug-zu-Fahrzeug-Kommunikationseinrichtungen (car-to-car-communication) ausgerüstet, die es drahtlos ermöglichen, von einem entgegenkommenden oder vorausfahrenden Fahrzeug, das über eine entsprechende Kommunikationseinrichtung verfügt, entsprechende Daten und Informationen abzufragen. Ist das eigene Fahrzeug mit einer solchen Einrichtung versehen und weist auch das gegebenenfalls kollidierende Fahrzeuge eine solche Einrichtung auf, kann ein entsprechender Datenaustausch erfolgen, wobei diese Daten bzw. Informationen entsprechend bei der Ermittlung des Vorliegens der Auswahlbedingungen oder der Auswahlparameter berücksichtigt werden.

Neben dem Verfahren betrifft die Erfindung ferner ein Kraftfahrzeug, umfassend wenigstens ein irreversibles Rückhaltesystem mit einer Rückhalteeinrichtung mit zugeordneter Steuerungseinrichtung zum Auslösen der Rückhalteeinrichtung, die vor dem Beginn einer tatsächlichen Kollision auslösbar ist, sowie wenigstens zwei unabhängig voneinander arbeitende, das Fahrzeugumfeld kontinuierlich vermessende Erfassungseinrichtungen, mittels welchen Informationen bezüglich eines sich im Umfeld befindlichen Objekts erfasst werden, welche Informationen mittels der Steuerungseinrichtung des Rückhaltesystems dahingehend analysiert werden, ob für eine Auslösung der Rückhalteeinrichtung zu erfüllende Auslösebedingungen gegeben sind. Dieses Kraftfahrzeug zeichnet sich erfindungsgemäß dadurch aus, dass die Steuerungseinrichtung zur separaten Analyse der Informationen jeder Erfassungseinrichtung dahin, ob die Auslösebedingungen gegeben sind, sowie zur Auslösung der Rückhalteeinrichtung nur dann, wenn beide Analyseergebnisse insoweit übereinstimmen, dass jeweils die Auslösebedingungen als erfüllt bestimmt werden, ausgebildet ist.

Es erfolgt also seitens der Steuerungseinrichtung eine redundante Analyse, ob eine Kollision wahrscheinlich ist und die Auslösebedingungen erfüllt werden und die Vorname eines entsprechenden Analysevergleichs, wobei die Auslösung tatsächlich nur dann erfolgt, wenn beide Analysen dasselbe Ergebnis liefern.

Zweckmäßigerweise kann das erfindungsgemäße Kraftfahrzeug eine weitere Erfassungseinrichtung umfassen, die ebenfalls objektbezogene Informationen liefert, wobei die Steuerungseinrichtung auch zur separaten Analyse dieser Informationen bezüglich des Vorliegens der Auslösebedingungen und zur Auslösung nur dann, wenn auch das dritte Analyseergebnis das Vorliegen der Auslösebedingungen anzeigt, ausgebildet ist.

Die Ermittlung der Auslöseparameter, die für die tatsächliche Durchführung der Auslösung der pyrotechnischen Rückhalteeinrichtung erforderlich respektive abzuarbeiten sind, erfolgt zweckmäßigerweise seitens der Steuerungseinrichtung anhand der Informationen aller Erfassungseinrichtungen, wobei bevorzugt die Erfassungseinrichtungen unterschiedlichen Typs sind. Als Erfassungseinrichtung kann eine Monokamera, eine Stereokamera, ein PMD-Sensor oder Radarsensoren verwendet werden.

Schließlich können auch Informationen über eine fahrzeugseitig vorgesehene Fahrzeug-zu-Fahrzeug-Kommunikationseinrichtung zur Erfassung von Objektinformationen ermittelt und im Rahmen der Analyse der Auslösebedingungen und/oder der Auslöseparameter erfasst werden.

Weitere Vorteile, Merkmale und Einzelheiten der Erfindung ergeben sich aus dem im Folgenden beschriebenen Ausführungsbeispiel sowie anhand der Zeichnung. Dabei zeigen:
- Fig. 1: eine Prinzipdarstellung eines erfindungsgemäßen Kraftfahrzeugs, und
- Fig. 2: ein Diagramm zur Darstellung des Ablaufs des erfindungsgemäßen Verfahrens.

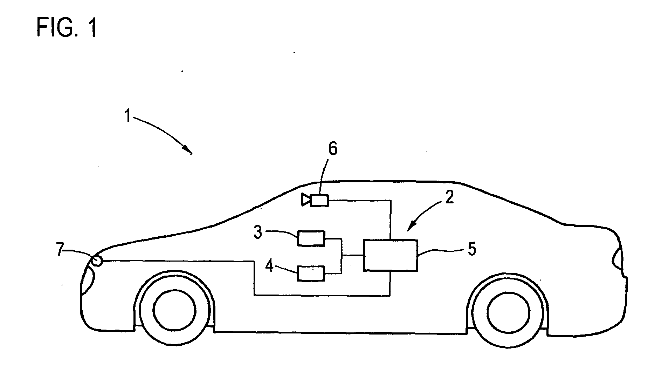

Fig. 1 zeigt eine Prinzipdarstellung eines erfindungsgemäßen Kraftfahrzeugs 1, umfassend ein irreversibles Rückhaltesystem 2, das zwei separate Rückhalteeinrichtungen 3, 4 umfasst. Bei der Rückhalteeinrichtung 3 kann es sich beispielsweise um einen Airbag handeln, bei der Rückhalteeinrichtung 4 um einen Gurtstraffer. Beide Rückhalteeinrichtungen sind pyrotechnischer Natur, werden also über einen pyrotechnischen Treibsatz, der zu zünden ist, im Bedarfsfall betrieben.

Beiden irreversiblen Rückhalteeinrichtungen ist im gezeigten Beispiel eine gemeinsame Steuerungseinrichtung 5 zugeordnet, wobei aber auch alternativ zum hier gezeigten Ausführungsbeispiel jeder Rückhalteeinrichtung 3, 4 eine eigene Steuerungseinrichtung zugeordnet sein kann, sodass jedes Paar aus Rückhalteeinrichtung und Steuerungseinrichtung ein separates Rückhaltesystem bilden würde. Die Steuerungseinrichtung 5 übernimmt die Verarbeitung ihr gegebener Daten, um zu ermitteln, ob eine Kollision unmittelbar bevorsteht, ob also Auslösebedingungen erfüllt sind, dass eine Ansteuerung und Betätigung der Rückhalteeinrichtungen 3 und/oder 4 erforderlich ist, wie sie auch die Ermittlung der Auslöseparameter, insbesondere des Auslösezeitpunkts, anhand der ihr gegebenen Informationen respektive Daten oder anhand von gestützt auf diese ermittelten weiterführenden Daten bestimmt.

Hierzu weist das erfindungsgemäße Kraftfahrzeug im gezeigten Ausführungsbeispiel zwei separate, vom Typ her unterschiedliche Erfassungseinrichtungen 6, 7 auf. Bei der Erfassungseinrichtung 6 handelt es sich beispielsweise um eine Monokamera oder eine Stereokamera oder einen PMD-Sensor, während es sich bei der Erfassungseinrichtung 7 beispielsweise um einen oder mehrere frontseitig verbaute Radarsensoren handelt. Beide Erfassungseinrichtungen 6, 7 nehmen jeweils das Fahrzeugvorfeld auf, die Erfassungseinrichtung 6, beispielsweise in Form einer Kamera, in Form von Bildern, die Radarsensoren in Form entsprechender ortsaufgelöster Abtastsignale. Die hierüber erfassten Informationen des Fahrzeugvorfelds werden im gezeigten Ausführungsbeispiel jeweils der Steuerungseinrichtung 5 gegeben, diese empfängt also die Vorfeldinformation sowohl der Erfassungseinrichtung 6 als auch der Erfassungseinrichtung 7. Dort erfolgt nun die Verarbeitung der einzelnen Informationen, und zwar derart, dass die jeweiligen Informationen separat, also getrennt voneinander verarbeitet werden. Die Steuerungseinrichtung 5 analysiert also zum einen separat die von der ersten Erfassungseinrichtung, also der Kamera, gelieferten Bilddaten, zum anderen separat die von dem oder den Radarsensoren, also der zweiten Erfassungseinrichtung 7 gelieferten Abtastsignale. Die separate Analyse der jeweiligen Informationen bzw. Daten erfolgt zu dem Zweck, um zu ermitteln, ob die Informationen das Vorliegen von vorab definierten Auslösebedingungen beschreiben, bzw. ob gestützt auf diese Informationen entsprechende Daten ermittelbar sind, die die Auslösebedingungen erfüllen. Bei den Erfassungseinrichtungen 6, 7 handelt es sich also ganz allgemein gesprochen um Sensoren, die Informationen liefern, die hinsichtlich relevanter Größen, die die Auslösebedingungen definieren, analysiert werden. Solche Größen bzw. Auslösebedingungen können beispielsweise der TTC-Wert (TTC= time-to-collision), die Objektmassenklasse, die Objektbreite oder die Objekthöhe, der Aprallort, der Anprallzeitpunkt oder der Anprallwinkel sein. Hierbei handelt es sich also allesamt um Daten, die Informationen geben bezüglich einer möglichen bevorstehenden Kollision des eigenen Kraftfahrzeugs mit einem Objekt, das innerhalb der Informationen, die von jeder der Erfassungseinrichtungen 6, 7 geliefert werden, über die Steuerungseinrichtung 5 durch geeignete Verarbeitungsalgorithmen erfasst werden kann.

Die Steuerungseinrichtung 5 prüft nun anhand jedes Informationsdatensatzes der ersten und der zweiten Erfassungseinrichtung 6, 7, ob jeder separate Informationsdatensatz die vorab definierten Auslösebedingungen erfüllt respektive als gegeben beschreibt. Ist dies der Fall, ist eine Kollision wahrscheinlich, sodass Handlungsbedarf besteht. Die Steuerungseinrichtung 5 vergleicht nun die jeweiligen einrichtungsspezifischen Analyseergebnisse und nimmt eine Ansteuerung einer oder beider Rückhalteeinrichtungen 3, 4 nur dann vor, wenn beide Analyseergebnisse gleich sind, mithin also beide Analysen ergeben, dass die Auslösebedingungen sowohl durch die erste Erfassungseinrichtung 6 als auch durch die zweite Erfassungseinrichtung 7 als gegeben beschrieben werden.

Parallel zur Analyse hinsichtlich des Vorliegens der Auslösebedingungen wird seitens der Steuerungseinrichtung 5 anhand der Informationen beider Erfassungseinrichtungen 6, 7, also anhand der kumulativ verarbeiteten Informationen, die Ermittlung der Auslöseparameter vorgenommen, insbesondere der Zeitpunkt der möglicherweise anstehenden Auslösung, sodass die Parameter möglichst zeitgleich mit dem Analyseergebnis hinsichtlich der Auslösebedingungen vorliegen. Neben dem Auslösezeitpunkt kann hierüber auch beispielsweise eine bestimmte Auslösecharakteristik ermittelt werden, die der Auslösung zugrunde liegt. Beispielsweise kann es sich bei der Rückhalteeinrichtung 3 um einen Airbag mit einem zweistufigen Gasgenerator handeln. Eine erste, langsame Stufe mit geringer Gasfördermenge wird beispielsweise zuerst ausgelöst, wenn die Analyse ergeben hat, dass die Auslösebedingungen gegeben sind. Das heißt, dass eine Vorauslösung vor dem eigentlichen Aufprall mit einer geringeren Gasfördermenge hierdurch eingeleitet wird. Eine zweiten schnelle Zündstufe mit erhöhter Gasfördermenge wird sodann zusammen mit der langsamen Zündstufe im Fall der konventionellen Auslösung durch eine fahrzeuginterne Verzögerungssensorik angesteuert, beispielsweise dann, wenn diese Fahrzeugsensorik den tatsächlichen Aufprall sensiert hat. Die zweite Zündstufe kann ebenfalls zugeschaltet werden, wenn der Auftreffzeitpunkt von der Umfeldsensorik, also den Einrichtungen 6, 7 zu spät bestimmt wurde und die fahrzeuginterne Verzögerungssensorik, beispielsweise geeignete Beschleunigungssensoren, schon vor dem durch die Erfassungseinrichtungen 6, 7 respektive die Steuerungseinrichtung 5 bestimmten Aufprallzeitpunkt einen auslösewürdigen Aufprall registriert.

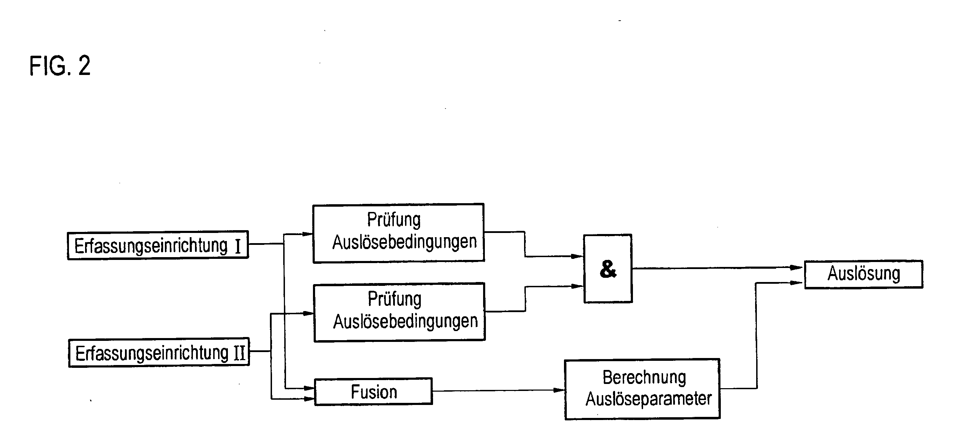

Fig. 2 zeigt ein Prinzipdiagramm, das das erfindungsgemäße Verfahren näher beschreibt. Gezeigt sind die erste und die zweite Erfassungseinrichtung, die kontinuierlich Erfassungsinformationen liefern. Wie das Diagramm zeigt, werden die Informationen der Erfassungseinrichtung I separat hinsichtlich des Vorliegens der Auslösebedingungen geprüft, Gleiches gilt für die Informationen der Erfassungseinrichtung II. Die Prüfungs- oder Analyseergebnisse werden anschließend miteinander verglichen, wie durch das "&" dargestellt ist.

Parallel dazu werden die Informationen der ersten und zweiten Erfassungseinrichtung fusioniert, wie dargestellt ist. Diese Daten- oder Informationsfusion wird der Ermittlung der Auslöseparameter zugrunde gelegt, also wie beschrieben insbesondere des Auslösezeitpunkts. Im nächsten Schritt wird, wenn der Vergleich der Analyseergebnisse gezeigt hat, dass beide Informationsdatensätze das Vorliegen der Auslösebedingungen beschreiben, in Verbindung mit den berechneten Auslöseparametern die Auslösung vorgenommen.

Abschließend ist darauf hinzuweisen, dass anstelle der Verwendung zweier separater vom Typ her unterschiedlicher Erfassungseinrichtungen auch eine eine oder mehrere weitere, vom Typ bevorzugt ebenfalls unterschiedliche Erfassungseinrichtungen in das System eingebunden sein können. Auch deren Informationen werden separat seitens der Steuerungseinrichtung 5 hinsichtlich der Auslösebedingungen analysiert, eine Freigabe der Auslösung wäre dann nur möglich, wenn auch dieses dritte bzw. jedes weitere Analyseergebnis mit den beiden anderen übereinstimmt. Die Informationen würden des Weiteren auch kumulativ im Rahmen der Datenfusion zur Berechnung der Auslöseparameter verarbeitet werden. Auch können Informationen einer nicht gezeigten car-to-car-Kommunikationseinrichtung bei der Prüfung bezüglich der Auslösebedingungen bzw. der Ermittlung der Auslöseparameter verarbeitet werden.

## Patentansprüche

1. Verfahren zur Auslösung wenigstens einer irreversiblen Rückhalteeinrichtung eines Kraftfahrzeugs vor dem Beginn einer tatsächlichen Kollision, wobei das Kraftfahrzeug wenigstens zwei unabhängig voneinander arbeitende, das Fahrzeugumfeld kontinuierlich vermessende Erfassungseinrichtungen aufweist, mittels welchen Informationen bezüglich eines sich im Umfeld befindlichen Objekts erfasst werden, welche Informationen dahingehend analysiert werden, ob für eine Auslösung einer Rückhalteeinrichtung zu erfüllende Auslösebedingungen gegeben sind,
**dadurch gekennzeichnet,**
**dass** anhand der Informationen jeder Erfassungseinrichtung separat analysiert wird, ob die Auslösebedingungen gegeben sind, wobei die Auslösung nur dann erfolgt, wenn beide Analyseergebnisse insoweit übereinstimmen, dass jeweils die Auslösebedingungen als erfüllt bestimmt wurden.

2. Verfahren nach Anspruch 1,
**dadurch gekennzeichnet,**
**dass** wenigstens eine weitere Erfassungseinrichtung verwendet wird, die ebenfalls objektbezogene Informationen liefert, die ebenfalls separat bezüglich des Vorliegens der Auslösebedingungen analysiert werden, wobei die Auslösung nur dann erfolgt, wenn auch das weitere Analyseergebnis das Vorliegen der Auslösebedingungen anzeigt.

3. Verfahren nach Anspruch 1 oder 2,
**dadurch gekennzeichnet,**
**dass** anhand der Informationen aller Erfassungssysteme die für das Auslösen erforderlichen Auslöseparameter ermittelt werden.

4. Verfahren nach einem der vorangehenden Ansprüche,
**dadurch gekennzeichnet,**
**dass** verschiedenartige Erfassungseinrichtungen zur Erfassung der Informationen verwendet werden.

5. Verfahren nach Anspruch 4,
**dadurch gekennzeichnet,**
**dass** als Erfassungseinrichtung verwendet werden: Monokamera, PMD-Sensor, Stereokamera, Radarsensoren.

6. Verfahren nach einem der vorangehenden Ansprüche,
**dadurch gekennzeichnet,**
**dass** zusätzlich mittels einer Fahrzeug-zu-Fahrzeug-Kommunikationseinrichtung Informationen des Objekts erfasst werden, die im Rahmen der Analyse der Auslösebedingungen und/oder der Ermittlung der Auslöseparameter berücksichtigt werden.

7. Kraftfahrzeug, umfassend wenigstens ein irreversibles Rückhaltesystem mit wenigstens einer Rückhalteeinrichtung mit zugeordneter Steuerungseinrichtung zum Auslösen der Rückhalteeinrichtung, die vor dem Beginn einer tatsächlichen Kollision auslösbar ist, sowie wenigstens zwei unabhängig voneinander arbeitende, das Fahrzeugumfeld kontinuierlich vermessende Erfassungseinrichtungen, mittels welchen Informationen bezüglich eines sich im Umfeld befindlichen Objekts erfasst werden, welche Informationen mittels der Steuerungseinrichtung des Rückhaltesystems dahingehend analysiert werden, ob für eine Auslösung der Rückhalteeinrichtung zu erfüllende Auslösebedingungen gegeben sind,
**dadurch gekennzeichnet,**
**dass** die Steuerungseinrichtung (5) zur separaten Analyse der Informationen jeder Erfassungseinrichtung (6, 7) dahin, ob die Auslösebedingungen gegeben sind, sowie zur Auslösung der Rückhalteeinrichtung (3, 4) nur dann, wenn beide Analyseergebnisse insoweit übereinstimmen, dass jeweils die Auslösebedingungen als erfüllt bestimmt wurden, ausgebildet ist.

8. Kraftfahrzeug nach Anspruch 7,
**dadurch gekennzeichnet,**
**dass** eine weitere Erfassungseinrichtung vorgesehen ist, die ebenfalls objektbezogene Informationen liefert, wobei die Steuerungseinrichtung (5) auch zur separaten Analyse dieser Informationen bezüglich des Vorliegens der Auslösebedingungen und zur Auslösung nur dann, wenn auch das dritte Analyseergebnis das Vorliegen der Auslösebedingungen anzeigt, ausgebildet ist.

9. Kraftfahrzeug nach Anspruch 7 oder 8,
**dadurch gekennzeichnet,**
**dass** die Steuerungseinrichtung (5) zur Ermittlung von für das Auslösen erforderlicher Auslöseparameter anhand der Informationen aller Erfassungseinrichtungen (6, 7) ausgebildet ist.

10. Kraftfahrzeug nach einem der Ansprüche 7 bis 9,
**dadurch gekennzeichnet,**
**dass** die Erfassungseinrichtungen (6, 7) zur Erfassung der Informationen unterschiedlichen Typs sind.

11. Kraftfahrzeug nach Anspruch 10,
**dadurch gekennzeichnet,**
**dass** die Erfassungseinrichtungen (6, 7) gewählt sind aus: Monokamera, PMD-Sensor, Stereokamera, Radarsensoren.

12. Kraftfahrzeug nach einem der Ansprüche 7 bis 11,
**dadurch gekennzeichnet,**
**dass** zusätzlich eine Fahrzeug-zu-Fahrzeug-Kommunikationseinrichtung zur Erfassung von Informationen des Objekts vorgesehen ist, wobei die Steuerungseinrichtung (5) zur Verarbeitung auch dieser Informationen im Rahmen der Analyse der Auslösebedingungen und/oder der Ermittlung der Auslöseparameter ausgebildet ist.

## Claims

1. Method for triggering at least one irreversible restraining device of a motor vehicle before the start of an actual collision, the motor vehicle comprising at least two acquisition devices which work independently of one another, continuously measure the surroundings of a vehicle, and by means of which information relating to an object located in the surroundings is acquired, which information is analysed to establish whether triggering conditions that have to be met in order to trigger a restraining device are satisfied, **characterised in that** a separate analysis is carried out on the basis of the information from each acquisition device to establish whether the triggering conditions are satisfied, the triggering only taking place when the two analysis results match to the extent that each result has determined that the triggering conditions have been met.

2. Method according to claim 1, **characterised in that** at least one additional acquisition device is used which likewise supplies information that relates to the object, which information is likewise separately analysed for the presence of the triggering conditions, the triggering only taking place if the result of the additional analysis also shows the presence of the triggering conditions.

3. Method according to either claim 1 or claim 2, **characterised in that** the triggering parameters required for triggering are determined on the basis of the information from all the acquisition systems.

4. Method according to any of the preceding claims, **characterised in that** various acquisition devices are used for acquiring the information.

5. Method according to claim 4, **characterised in that** the following are used as acquisition devices: mono camera, PMD sensor, stereo camera, and radar sensors.

6. Method according to any of the preceding claims, **characterised in that** information relating to the object is also acquired by means of a vehicle-to-vehicle communication device and is taken into account in the analysis of the triggering conditions and/or in the determination of the triggering parameters.

7. Motor vehicle comprising at least one irreversible restraining system having at least one restraining device which has an associated control device for triggering the restraining device which can be triggered before the start of an actual collision, and comprising at least two acquisition devices which work independently of one another, continuously measure the vehicle surroundings, and by means of which information relating to an object located in the surroundings is acquired, which information is analysed by the control device of the restraining system to establish whether triggering conditions that have to be met in order to trigger the restraining device are satisfied, **characterised in that** the control device (5) is designed to separately analyse the information from each acquisition device (6, 7) to establish whether the triggering conditions are satisfied, and to only trigger the restraining device (3, 4) when the two analysis results match to the extent that each result has determined that the triggering conditions have been met.

8. Motor vehicle according to claim 7, **characterised in that** an additional acquisition device is provided, which likewise supplies information relating to an object, the control device (5) also being designed to separately analyse said information relating to the presence of the triggering conditions and to trigger only when the result of the third analysis also shows the presence of the triggering conditions.

9. Motor vehicle according to either claim 7 or claim 8, **characterised in that** the control device (5) is designed to determine triggering parameters, which are required for the triggering, on the basis of the information from all the acquisition devices (6, 7).

10. Motor vehicle according to any of claims 7 to 9, **characterised in that** the acquisition devices (6, 7) are for acquiring different types of information.

11. Motor vehicle according to claim 10, **characterised in that** the acquisition devices (6, 7) are selected from the group consisting of mono camera, PMD sensor, stereo camera, and radar sensors.

12. Motor vehicle according to any of claims 7 to 11, **characterised in that** a vehicle-to-vehicle communication device is also provided for acquiring information relating to the object, the control device (5) being designed to also process this information in the analysis of the triggering conditions and/or in the determination of the triggering parameters.

## Revendications

1. Procédé de déclenchement d'au moins un dispositif de retenue irréversible d'un véhicule automobile avant le début d'une collision proprement dite, dans lequel le véhicule automobile présente au moins deux dispositifs de saisie opérant indépendamment l'un de l'autre et mesurant en continu le champ ambiant de l'automobile, au moyen desquels dispositifs sont saisies des informations relatives à un objet se trouvant dans le champ ambiant, lesquelles informations sont analysées pour savoir si les conditions de déclenchement à remplir pour le déclenchement d'un dispositif de retenue ont été remplies,
**caractérisé en ce que** :
sur la base des informations de chaque dispositif de saisie, on analyse séparément si les conditions de déclenchement ont été remplies, dans lequel le déclenchement ne se fait alors que si les deux résultats d'analyse concordent suffisamment pour que, respectivement, les conditions de déclenchement soient considérées comme remplies.

2. Procédé selon la revendication 1,
**caractérisé en ce que** :
l'on utilise au moins un autre dispositif de saisie qui fournit également des informations se rapportant à l'objet, qui sont analysées aussi séparément quant à l'existence des conditions de déclenchement, dans lequel le déclenchement ne se fait que si l'autre résultat d'analyse montre également l'existence des conditions de déclenchement.

3. Procédé selon la revendication 1 ou la revendication 2,
**caractérisé en ce que** :
l'on détermine, sur la base des informations de tous les systèmes de saisie, les paramètres de déclenchement nécessaires pour le déclenchement.

4. Procédé selon l'une quelconque des revendications précédentes,
**caractérisé en ce que** :
l'on utilise des dispositifs de saisie de divers types pour saisir les informations.

5. Procédé selon la revendication 4,
**caractérisé en ce que** :
l'on utilise comme dispositif de saisie une caméra mono, un capteur PMD, une caméra stéréo et des capteurs de radar.

6. Procédé selon l'une quelconque des revendications précédentes,
**caractérisé en ce que** :
l'on détermine également au moyen d'un dispositif de communication de véhicule à véhicule des informations sur l'objet qui sont prises en compte dans le cadre de l'analyse des conditions de déclenchement et/ou de la détermination des paramètres de déclenchement.

7. Véhicule automobile comprenant au moins un système de retenue irréversible avec au moins un dispositif de retenue pourvu d'un dispositif de commande correspondant pour déclencher le dispositif de retenue, qui peut être déclenché avant le début d'une collision proprement dite, ainsi qu'au moins deux dispositifs de saisie opérant indépendamment l'un de l'autre et mesurant en continu le champ ambiant de l'automobile, au moyen desquels dispositifs sont saisies des informations relatives à un objet se trouvant dans le champ ambiant, lesquelles informations sont analysées au moyen du dispositif de commande du système de retenue pour savoir si les conditions de déclenchement à remplir pour le déclenchement du dispositif de retenue ont été remplies,
**caractérisé en ce que** :
le dispositif de commande (5) est conformé pour l'analyse séparée des informations de chaque dispositif de saisie (6, 7) pour savoir si les conditions de déclenchement sont remplies, ainsi que pour le déclenchement du dispositif de retenue (3, 4) uniquement si les deux résultats d'analyse concordent suffisamment pour que, respectivement, les conditions de déclenchement soient considérées comme remplies.

8. Véhicule automobile selon la revendication 7,
**caractérise en ce que** :
il est prévu un autre dispositif de saisie qui fournit également des informations se rapportant à l'objet, dans lequel le dispositif de commande (5) est conformé également pour l'analyse séparée de ces informations concernant l'existence des conditions de déclenchement et pour le déclenchement uniquement si le troisième résultat d'analyse montre également l'existence des conditions de déclenchement.

9. Véhicule automobile selon la revendication 7 ou la revendication 8,
**caractérisé en ce que** :
le dispositif de commande (5) est conformé pour déterminer des paramètres de déclenchement nécessaires pour le déclenchement sur la base des informations de tous les dispositifs de saisie (6, 7).

10. Véhicule automobile selon l'une quelconque des revendications 7 à 9,
**caractérisé en ce que** :
les dispositifs de saisie (6, 7) pour la saisie des informations sont de types différents.

11. Véhicule automobile selon la revendication 10, **caractérisé en ce que** :
les dispositifs de saisie (6, 7) sont choisis parmi une caméra mono, un capteur PMD, une caméra stéréo et des capteurs de radar.

12. Véhicule automobile selon l'une quelconque des revendications 7 à 11,
**caractérisé en ce que** :
il est prévu également un dispositif de communication de véhicule à véhicule pour saisir des informations sur l'objet, dans lequel le dispositif de commande (5) est conformé également pour traiter ces informations dans le cadre de l'analyse des conditions de déclenchement et/ou de la détermination des paramètres de déclenchement.
